# EUROPEAN PATENT SPECIFICATION

(11) **EP 1 707 852 B1**
(45) Date of publication and mention of the grant of the patent: **22.04.2009**
(21) Application number: 06003501.1
(22) Date of filing: 21.02.2006
(51) Int. Cl.: F16H 57/02, F16H 63/18

(54) **Transmission structure of power unit for vehicle**
Getriebeanordnung für Motoraggregat eines Kraftfahrzeugs
Structure de transmission d'un ensemble de propulsion de véhicule

(30) Priority: 28.03.2005 JP 2005092401
(43) Date of publication of application: 04.10.2006
(73) Proprietor: HONDA MOTOR CO., LTD., Tokyo (JP)
(72) Inventor: Tawarada, Yuichi, Wako-shi Saitama, 351-0193 (JP); Kawakubo, Hiroyuki, Wako-shi Saitama, 351-0193 (JP)
(74) Representative: Rupp, Christian

(56) References cited:
- CA-A1- 2 476 811
- GB-A- 2 404 705
- US-A- 4 920 825
- PATENT ABSTRACTS OF JAPAN vol. 2003, no. 09, 3 September 2003 (2003-09-03) & JP 2003 148612 A (SUZUKI MOTOR CORP), 21 May 2003 (2003-05-21)

## Description

The present invention relates to transmission structure of a power unit for a vehicle where a crankshaft, a main shaft and a counter shaft provided with selectively establishable plural-speed gear trains between the counter shaft and the main shaft are supported by a crankcase so that the shafts can be rotated with the shafts having a mutually parallel axis, a clutch mechanism provided between the crankshaft and the main shaft is installed at the end of the main shaft outside the crankcase, and both ends in an axial direction of a shift drum for driving shift forks for selectively establishing the speed are supported by the crankcase so that the shift drum can be turned around an axis parallel to the crankshaft, the main shaft and the counter shaft.

A power unit for a vehicle in which a clutch mechanism is installed at one end of a main shaft of a transmission provided with multiple-speed gear trains and a shift drum for driving shift forks is assembled in a crankcase from the side reverse to the clutch mechanism is known.

Patent documents CA 2 476 811 A1 and GB 2 404 705 A show an arrangement for a motorcycle transmission. A shift drum transmission is made modular as a cartridge type transmission which can be detached from a transmission attachment surface formed around an opening of the transmission case. The shift drum transmission comprises a detachable transmission holder. A main shaft, a counter shaft, a shift drum, and two shift fork shafts are supported to the transmission holder.

In particular, CA 2 476 811 discloses a transmission structure of a power unit for a vehicle where
- a crankshaft, a main shaft and a counter shaft provided with selectively establishable plural speed gear trains between the counter shaft and the main shaft are supported by a crankcase so that the shafts can be rotated in a state in which the crankshaft, the main shaft and the counter shaft have a mutually parallel axis,
- a clutch mechanism provided between the crankshaft and the main shaft is installed at the end of the main shaft,
- a shift drum for driving shift forks for selectively establishing the gear trains is supported by the crankcase so that the shift drum can be turned around an axis parallel to the crankshaft, the main shaft and the counter shaft,
- the shift drum is assembled in the crankcase from the side of the clutch mechanism,
- a shift fork spindle is disposed between the counter shaft and the shift drum,
- the crankcase is formed by connecting respective cast upper and lower cases,
- an upper part of the transmission chamber formed by the upper case is overlapped with the clutch mechanism on the said projection drawing.

Patent document JP 2003-148612 shows a transmission device for a motorcycle comprising a shift mechanism and a main shaft, both arranged between a crankshaft and a counter shaft.

However, as in the power unit disclosed in the patent document 1, in a power unit in which a shift drum is assembled in a crankcase from the side reverse to a clutch mechanism, sealed structure dedicated to the shift drum is required, the number of parts is increased, and the manhours of assembly are increased.

The invention is made in view of such a situation and the object is to provide the transmission structure of a power unit for a vehicle in which no sealed structure dedicated to a shift drum is required, the number of parts can be reduced and the manhours of assembly can be reduced.

To achieve the object, the invention disclosed in Claim 1 is based upon the transmission structure of a power unit for a vehicle where a crankshaft, a main shaft and a counter shaft provided with selectively establishable plural-speed gear trains between the counter shaft and the main shaft are supported by a crankcase so that the shafts can be rotated with the shafts having a mutually parallel axis, a clutch mechanism provided between the crankshaft and the main shaft is installed at the end of the main shaft outside the crankcase and both ends in an axial direction of a shift drum for driving shift forks for selectively establishing the gear train are supported by the crankcase so that the shift drum can be turned around an axis parallel to the crankshaft, the main shaft and the counter shaft, and is characterized in that the shift drum arranged in the maximum outside diameter of the clutch mechanism on a projection drawing showing a plane perpendicular to the axis of the main shaft is assembled in the crankcase from the side of the clutch mechanism.

Besides, the invention disclosed in Claim 2 is based upon the configuration of the invention disclosed in Claim 1 and is characterized in that a transmission chamber housing each gear train and the shift forks is formed at the back of the crankshaft in a state mounted in the vehicle in the crankcase and a shift drum chamber forming a part of the transmission chamber and housing most of the shift drum is formed in the rear of the crankcase so that the shift drum chamber semicircularly swells toward the rear of the crankcase when the shift drum chamber is viewed from an axial direction of the shift drum.

The invention disclosed in Claim 3 is based upon the configuration of the invention disclosed in Claim 2.

Further, the invention disclosed in Claim 4 is based upon the configuration of the invention disclosed in Claim 2 or 3 and is characterized in that a receiving flange for receiving a bearing member installed on the periphery of one end on the side of the clutch mechanism of the shift drum from the side of the clutch mechanism is formed in a member forming at least a part of the crankcase and cast for supporting both ends of the shift drum and the shift drum chamber is cast out with the shift drum chamber having the same diameter as the inside diameter of the receiving flange.

According to the invention disclosed in Claim 1, as the shift drum is arranged in the maximum outside diameter of the clutch mechanism on the projection drawing showing the plane perpendicular to the axis of the main shaft and is assembled in the crankcase from the side of the clutch mechanism, a part to be sealed between the shift drum and the crankcase is included in a sealed range of the clutch mechanism, the sealed range is not required to be extended, and as sealed structure dedicated to the shift drum is not required, the number of parts and the manhours of assembly can be reduced.

According to the invention disclosed in Claim 2, as the shift drum chamber forming a part of the transmission chamber and housing most of the shift drum is formed in the rear of the crankcase so that the shift drum chamber semicircularly swells toward the rear of the crankcase, a part except the shift drum chamber in the transmission chamber can be made compact.

According to the invention, as the upper part of the transmission chamber formed by the upper case is overlapped with the clutch mechanism on the projection drawing showing the plane perpendicular to the axis of the main shaft, the rear end of the crankcase can be arranged possibly close to the axis of the counter shaft in the state mounted in the vehicle and when the transmission structure is applied to a motorcycle provided with a swing arm for supporting a rear wheel, the part for supporting the front end of the swing arm can be arranged close to the counter shaft.

Further, according to the invention disclosed in Claim 4, as the shift drum chamber is formed by casting out, machining is not required and the cost can be reduced. Besides, as a small assembly in which a shift drum subassembly such as a bearing for holding the shift drum is attached to the shift drum beforehand can be assembled in the crankcase, the performance of assembly is enhanced.
Fig. 1 is a side view showing a power unit;
Fig. 2 is a sectional view viewed along a line 2-2 shown in Fig. 1;
Fig. 3 is a bottom view showing an upper case viewed along a line 3-3 shown in Fig. 1;
Fig. 4 is an enlarged sectional view viewed along a line 4-4 shown in Fig. 1;
Fig. 5 is an enlarged sectional view viewed along a line 5-5 shown in Fig. 1;
Fig. 6 is a view viewed from a direction shown by an arrow 6 in Fig. 3;
Fig. 7 is a sectional view viewed along a line 7-7 shown in Fig. 3;
Fig. 8 is a view viewed from a direction shown by an arrow 8 in Fig. 4; and
Fig. 9 is a view viewed from a direction shown by an arrow 9 in Fig. 1.

One embodiment of the invention shown in the attached drawings will be described below.

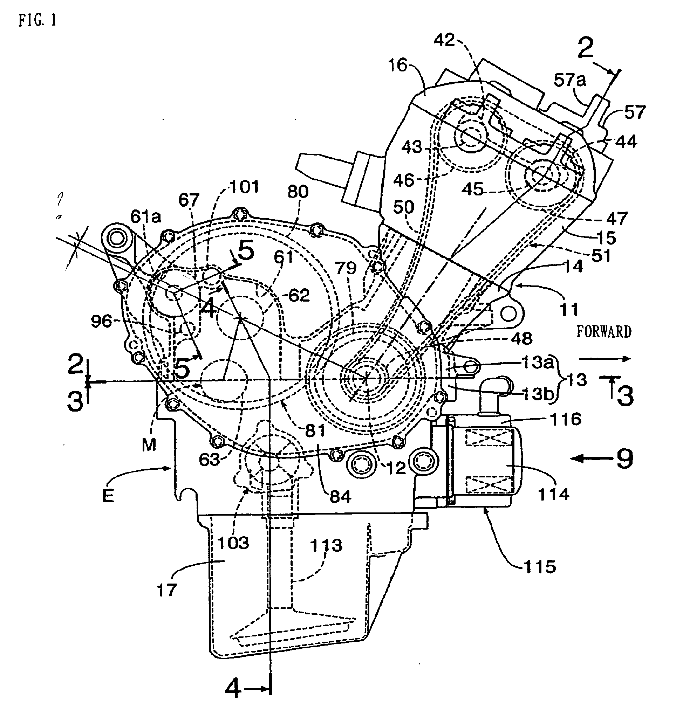

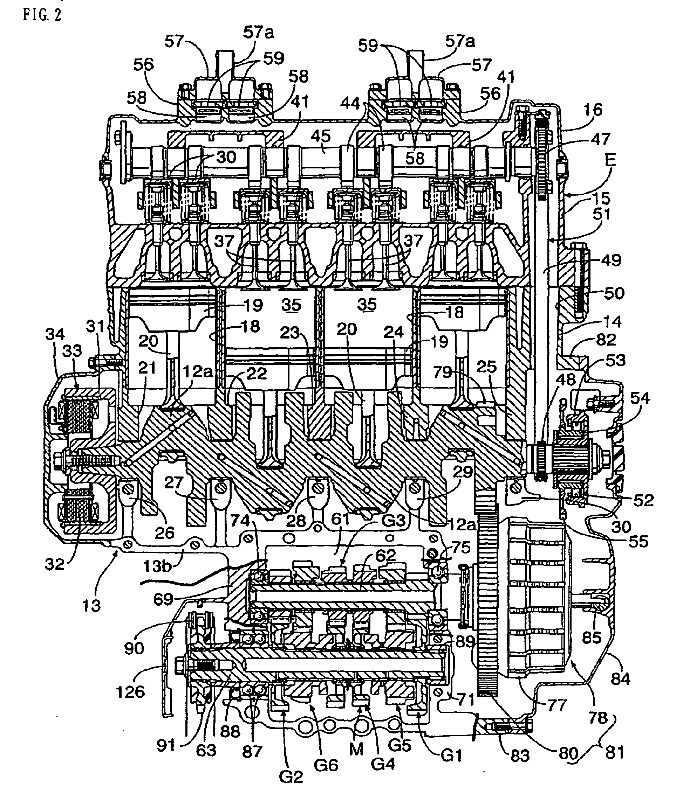

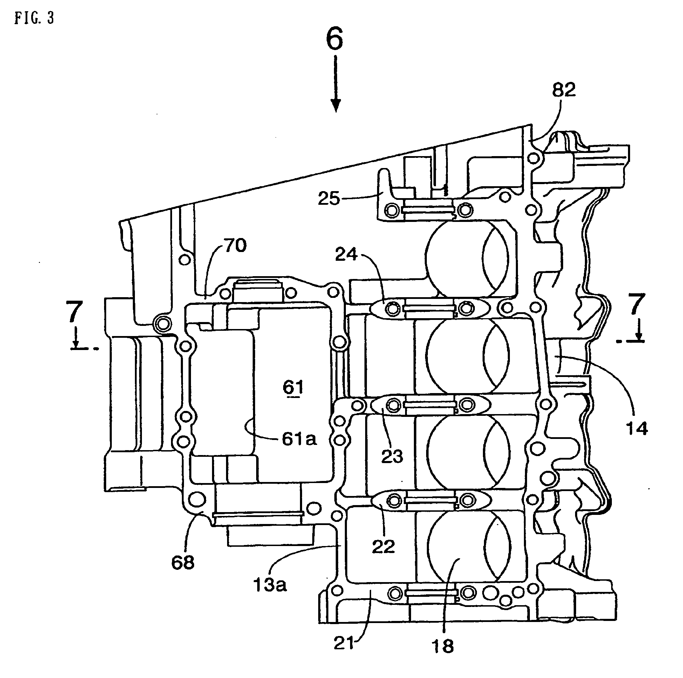

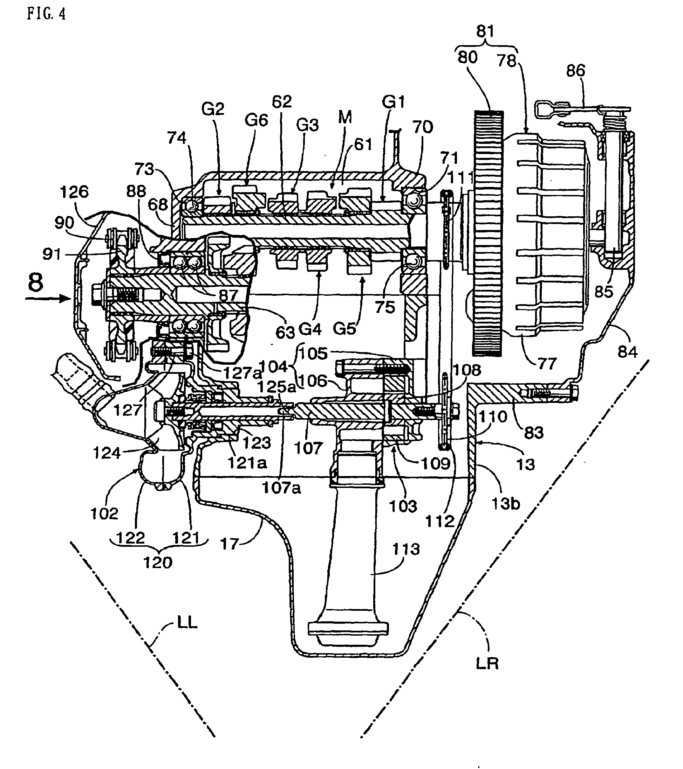

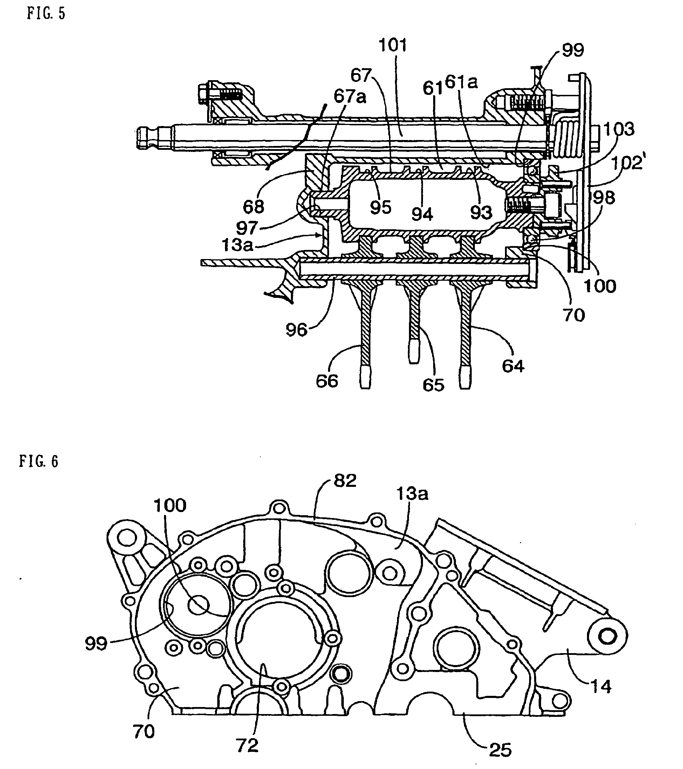

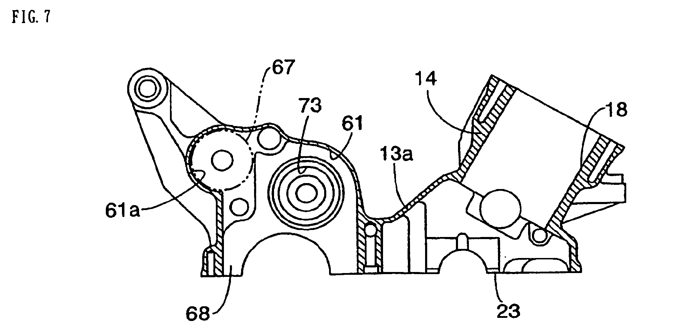

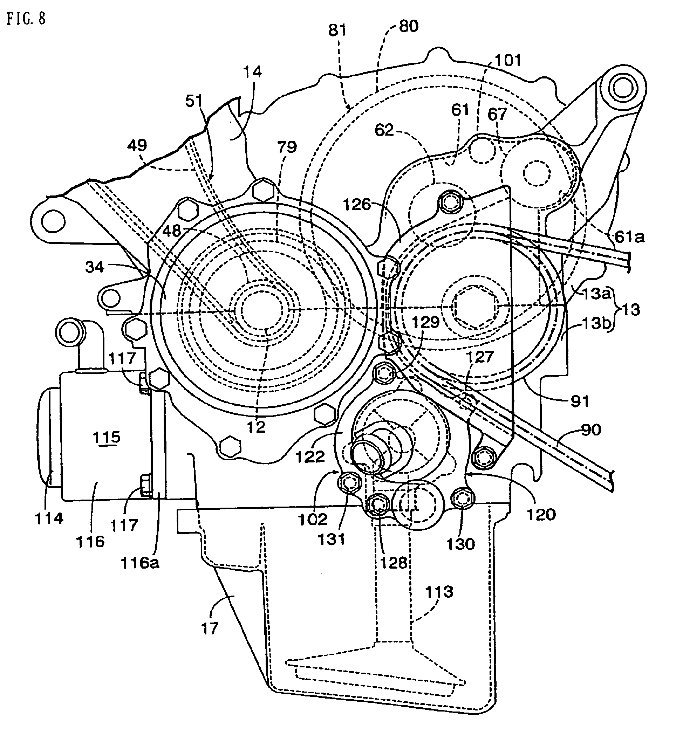

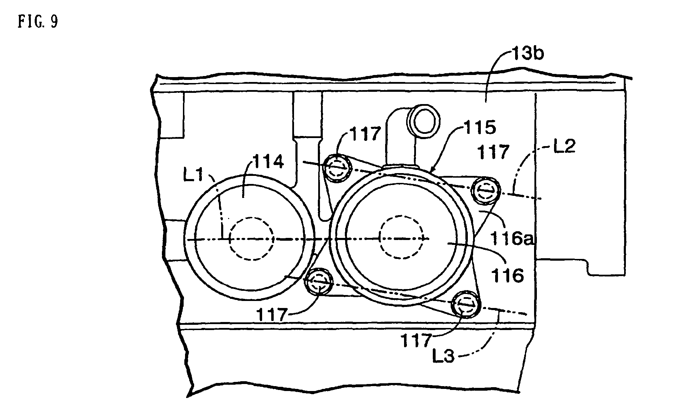

Figs. 1 to 9 show one embodiment of the invention, Fig. 1 is a side view showing a power unit, Fig. 2 is a sectional view viewed along a line 2-2 shown in Fig. 1, Fig. 3 is a bottom view showing an upper case viewed along a line 3-3 shown in Fig. 1, Fig. 4 is an enlarged sectional view viewed along a line 4-4 shown in Fig. 1, Fig. 5 is an enlarged sectional view viewed along a line 5-5 shown in Fig. 1, Fig. 6 is a view viewed from a direction shown by an arrow 6 in Fig. 3, Fig. 7 is a sectional view viewed along a line 7-7 shown in Fig. 3, Fig. 8 is a view viewed from a direction shown by an arrow 8 in Fig. 4, and Fig. 9 is a view viewed from a direction shown by an arrow 9 in Fig. 1.

First, as shown in Fig. 1, this power unit is mounted in a vehicle, for example, a motor cycle and is provided with an in-line 4-cylinder water-cooled engine E for example and a constant-mesh type transmission M that shifts the output of the engine E.

The body 11 of the engine E is provided with a crankcase 13 for supporting a crankshaft 12 having an axis extended in a lateral direction of the motorcycle so that the crankshaft can be rotated, a cylinder block 14 coupled to the crankcase 13 on the front side in a traveling direction of the motorcycle, a cylinder head 15 coupled to the upper end of the cylinder block 14 and a head cover 16 coupled to the upper end of the cylinder head 15, and an oil pan 17 is coupled to a lower part of the crankcase 13.

The crankcase 13 is formed by mutually connecting an upper case 13a and a lower case 13b respectively cast and the crankshaft 12 is supported between the upper case 13a and the lower case 13b so that the crankshaft can be rotated.

Also referring to Fig. 2, the cylinder block 14 is integrated with the upper case 13a of the crankcase 13 in a state that the cylinder block is inclined forward in the traveling direction of the motorcycle, four cylinder bores 18 arranged along the axis of the crankshaft 12 are provided to the cylinder block 14, and a piston 19 fitted into each cylinder bore 18 so that the piston can be slid is coupled to a crankpin 12a with which the crankshaft 12 is provided via a connecting rod 20.

Also referring to Fig. 3, five first to fifth upper journal walls 21 to 25 arranged mutually at an interval from the left side to the right side along the axis of the crankshaft 12 in a state in which the power unit is mounted in the motorcycle are provided to the upper case 13a of the crankcase 13. First to fifth lower journal walls 26 to 30 corresponding to the first to fifth upper journal walls 21 to 25 are provided to the lower case 13b in a state in which the first to fifth lower journal walls 26 to 30 are connected to the corresponding first to fifth upper journal walls 21 to 25 as shown in Fig. 2, and the crankshaft 12 is supported between bonded faces of the upper and lower cases 13a, 13b, that is, between the corresponding bonded faces of the first to fifth upper journal walls 21 to 25 and the first to fifth lower journal walls 25 to 30 so that the crankshaft can be rotated.

An outer rotor 31 is fixed to one end of the crankshaft 12 protruded outside from the left side wall of the crankcase 13, that is, from the first upper and lower journal walls 21, 26 and an inner rotor 32 configuring a generator 33 together with the outer rotor 31 is attached to a generator cover 34 fastened to the left wall of the crankcase 13 for covering the generator 33.

As shown in Fig. 2, a combustion chamber 35 is formed opposite to the top of each piston 19 fitted into each cylinder bore 18 so that the piston can be slid between the cylinder block 14 and the cylinder head 15, a pair of exhaust valves 37 are arranged every combustion chamber 35 in the cylinder head 15 so that the exhaust valves can be opened, being pressed by each spring in a direction in which the exhaust valve is closed, and a bottomed cylindrical lifter 39 on the side of the exhaust valve the inner face of the closed end of which is touched to the top of each exhaust valve 37 is fitted to the cylinder head 15 so that the lifter can be slid in the opened direction of the exhaust valve 37. Besides, in the cylinder head 15, like the exhaust valves, a pair of intake valves (not shown) are arranged every combustion chamber 35 so that the intake valve can be opened, being pressed by each spring in a direction in which the intake valve is closed, and.a bottomed cylindrical lifter (not shown) on the side of the intake valve the inner face of the closed end of which is touched to the top of each intake valve is fitted to the cylinder head 15 so that the lifter can be slid in the opening/closing operating direction of the intake valve.

A camshaft 45 on the exhaust side provided with plural cams 44 on the exhaust side slid on the outside face of the closed end of each lifter 39 on the side of the exhaust valve is supported by the cylinder head 15 and cam holders 41, 41 on the exhaust side fastened to the cylinder head 15 so that the camshaft can be rotated in parallel with the crankshaft 12, and a camshaft 43 on the intake side (see Fig. 1) provided with plural cams 42 (see Fig. 1) on the intake side slid on the outside face of the closed end of each lifter on the side of the intake valve is supported by the cylinder head 15 and a cam holder (not shown) on the intake side fastened to the cylinder head 15 so that the camshaft can be rotated in parallel with the crankshaft 12.

The rotational power of the crankshaft 12 is transmitted to the camshafts on the intake side and on the exhaust side 43, 45 via timing transmission means 51, the timing transmission means 51 is provided with driven sprockets on the intake side and on the exhaust side 46, 47 fixed to the right ends of the camshafts on the intake side and on the exhaust side 43, 45, a driving sprocket 48 provided to the crankshaft 12 outside the fifth upper and lower journal walls 25, 30 and a looped cam chain 49 wound onto the driving sprocket 48, the driven sprocket on the exhaust side 47 and the driven sprocket on the intake side 46, and a chain passage 50 for the cam chain 49 to travel is formed in the cylinder block 14, the cylinder head 15 and the head cover 16 on the side of the other end of the crankshaft 12.

A one-way clutch 52 including a clutch outer 53 in which relative rotation with the crankshaft 12 is impossible and a clutch inner 54 in which relative rotation with the crankshaft 12 is enabled and that is provided with a driven gear 55 to which power from a starting motor not shown is input is installed on the other end of the crankshaft 12 outside the driving sprocket 48, and the one-way clutch 52 enables only the transmission of power from the clutch inner 54 to the clutch outer 53, that is, from the starting motor to the side of the crankshaft 12.

A pair of left and right mounting cylinders 56, 56 corresponding to a pair of cylinders located on the left side in a state mounted in the motorcycle and a pair of cylinders located on the right side are protruded from the head cover 16 and caps 57 are fastened to the mounting cylinders 56.

A secondary air passage 58 individually open to an exhaust port of each cylinder is independently formed in the mounting cylinders 56 and a reed valve 59 individually corresponding to the secondary air passage 58 is held between the mounting cylinders 56 and the cap 58. In addition, a connecting tube 57a for connecting a pipe for leading lightened secondary air from an air cleaner not shown is integrated with each cap 58.

Also referring to Figs. 4 and 5, a transmission chamber 61 is formed at the back of the crankshaft 12 in the state mounted in the motorcycle in the crankcase 13 and a main part of the transmission M is housed in the transmission chamber 61.

The transmission M is provided with a main shaft 62 having an axis parallel to the crankshaft 12, a counter shaft 63 having an axis parallel to the main shaft 62, plural shift means provided between the main shaft 62 and the counter shaft 63 so that each means can be selectively established, for example, six first- to sixth-speed gear trains G1 to G6, three shift forks 64, 65, 66 for selectively establishing the first- to sixth-speed gear trains G1 to G6 and a shift drum 67 for driving the shift forks 64 to 66, most of the main shaft 62, the counter shaft 63 and the shift drum 67 are housed in the transmission chamber 61, and the first- to sixth-speed gear trains G1 to G6 and the shift forks 64 to 66 are housed in the transmission chamber 61 so that they can be operated.

In the upper and lower cases 13a, 13b of the crankcase 13, upper and lower left supporting walls 68, 69 forming a left end wall of the transmission chamber 61 in the state mounted in the motorcycle are connected in positions substantially corresponding to the second upper and lower journal walls 22, 26, upper and lower right supporting walls 70, 71 forming a right end wall of the transmission chamber 61 in the state mounted in the motorcycle are connected in positions substantially corresponding to the fourth upper and lower journal walls 24, 29, and the upper and lower left supporting walls 68, 69 are arranged inside a part supporting the crankshaft 12 of the left wall of the crankcase 13 along the axis of the crankshaft 12.

Also referring to Figs. 6 and 7, a supporting hole 72 for piercing the main shaft 62 so that the main shaft can be rotated is provided to the right upper supporting wall 70 of the upper case 13a and a supporting concave portion 73 which is coaxial with the supporting hole 72 is provided to the left upper supporting wall 68. A ball bearing 74 is inserted between the outside periphery at one end of the main shaft 62 and the inside circumference of the supporting concave portion 73 and a ball bearing 75 is inserted between the inside circumference of the supporting hole 72 and the main shaft 62. That is, one end of the main shaft 62 is supported by the left upper supporting wall 68 so that one end of the main shaft 62 can be rotated, an intermediate part of the main shaft 62 is supported by the right upper supporting wall 70 so that the intermediate part of the main shaft can be rotated, and the other end of the main shaft 62 is protruded outside the right upper supporting wall 70, that is, outside the right side of the crankcase 13.

A clutch 78 provided with a clutch inner (not shown) in which relative rotation with the main shaft 62 is impossible and a clutch outer 77 in which relative rotation with the main shaft 62 is enabled and formed in a conventional well-known multiple disc type is installed at the other end of the main shaft 62, a primary driven gear 80 forming a clutch mechanism 81 together with the clutch 78 is coupled to the clutch outer 77 via a damper spring not shown, and a primary driving gear 79 provided to the crankshaft 12 inside the fifth upper and lower journal walls 25, 30 is engaged with the primary driven gear 80 as definitely shown in Fig. 2. In addition, the maximum outside diameter of the clutch mechanism 81 is formed by the primary driven gear 80.

Extended wall parts 82, 83 extended rightward to form a cylinder for encircling the clutch 78 and the one-way clutch 52 in collaboration are provided to the upper and lower cases 13a, 13b in the crankcase 13 and a right cover 84 for covering the clutch 78 and the one-way clutch 52 is fastened to the extended wall parts 82, 83. In addition, the extended wall parts 82, 83 and the right cover 84 are bonded so that they have a plane inclined inside along the axis of the crankshaft 16 in a lower part.

An operating shaft 85 for letting in/out the clutch 78 is supported by the right cover 84 so that the operating shaft can be rotated and a release lever 86 is provided to the end protruded from the right cover 84 of the operating shaft 85.

The counter shaft 63 is supported by the bonded faces of the upper case 13a and the lower case 13b respectively forming the crankcase 13 so that the counter shaft can be rotated, is arranged on the rear side of the crankshaft 12, one end of the counter shaft 63 is protruded outside from the left upper supporting wall 68 and the left lower supporting wall 69, and a ball bearing 87 and a circular sealing member 88 arranged outside the ball bearing 87 are inserted between the left upper supporting wall 68 and the counter shaft 63 and between the left lower supporting wall 69 and the counter shaft 63. The other end of the counter shaft 63 is supported by the right upper supporting wall 70 and the right lower supporting wall 71 via a needle bearing 89 so that the counter shaft can be rotated.

The main shaft 62 is supported by the upper case 13a out of the upper and lower cases 13a, 13b respectively forming the crankcase 13 so that the main shaft can be rotated, while the crankshaft 12 and the counter shaft 63 are supported between the upper and lower cases 13a, 13b so that they can be rotated, and the main shaft 62 is arranged over a straight line tying the axis of the crankshaft 12 and an axis of the counter shaft 63, that is, over the bonded faces of the upper and lower cases 13a, 13b.

A driving sprocket 91 is provided to one end of the counter shaft 63 protruded outside from the left upper supporting wall 68 and the left lower supporting wall 69 and a looped chain 90 for transmitting power to a rear wheel which is a driving wheel is wound onto the driving sprocket 91.

As shown in Fig. 5, both ends of the shift drum 67 are supported by the left and right upper supporting walls 68, 70 of the upper case 13a in the crankcase 13 so that the shift drum can be rotated, and the shift forks 64 to 66 fitted into three fitting grooves 93, 94, 95 provided to the outside face of the shift drum 67 are supported in common by a single spindle 96 having an axis parallel to the shift drum 67 and provided between the left and right upper supporting walls 68, 70 so that the shift forks can be slid in an axial direction of the spindle.

A small-diameter shank 67a is coaxially and integrally protruded from one end of the shift drum 67 and is fitted into a supporting concave portion 97 provided to the left upper supporting wall 68 so that the shank can be rotated. In addition, the shift drum 67 is attached to the crankcase 13 from the side of the clutch mechanism 81 installed at the right end of the crankshaft 12, and a supporting hole 99 for fitting a ball bearing 98 which is a bearing member and which is installed on the periphery of one end on the side of the clutch 78 of the shift drum 67 and a receiving flange 100 extended inside in a radial direction from the inner end of the supporting hole 99 to receive the inner end of an outer ring of the ball bearing 98 from the side of the clutch 78 are coaxially formed on the right upper supporting wall 70 of the upper case 13a.

The shift drum 67 is arranged in the maximum outside diameter of the clutch mechanism 81 on a projection drawing showing a plane perpendicular to an axis of the main shaft 62 as shown in Fig. 1, a shift drum chamber 61a forming a part of the transmission chamber 61 and housing most of the shift drum 67 is formed in the rear of the upper case 13a in the crankcase 13 in a state in which the shift drum chamber semicircularly swells toward the rear of the crankcase 13 when the shift drum chamber is viewed from an axial direction of the shift drum 67, and a wall forming the shift drum chamber 61a is also substantially housed in the maximum outside diameter of the clutch mechanism 81, that is, in the outside diameter of the primary driven gear 80 on the projection drawing showing the plane perpendicular to the axis of the main shaft 62. In addition, the shift drum chamber 61a has the same diameter as the inside diameter of the receiving flange 100 formed on the right upper supporting wall 70 and is cast out when the upper case 13a is cast. An upper part of the transmission chamber 61 formed in the upper case 13a is overlapped with the clutch mechanism 81 on the projection drawing showing the plane perpendicular to the axis of the main shaft 62 as shown in Fig. 1.

A shift shaft 101 a part of which is protruded leftward from the upper case 13a is supported by the upper case 13a so that the shift shaft can be rotated and one end of a shift arm 102' is provided to the other end of the shift shaft 101. A shift cam 103 is provided to the other end of the shift drum 67 and the other end of the shift arm 102 is fitted to the shift cam 103 to turn the shift drum 67 according to the turning of the shift shaft 101.

A water pump 102 is arranged on the left side of the lower case 13b in the crankcase 13 between the crankshaft 12 and the counter shaft 63 as shown in Fig. 8 and an oil pump 103 coaxial with the water pump 102 is housed in a lower part of the crankcase 13.

As shown in Fig. 4, the oil pump 103 is a trochoid type, a pump housing 104 is formed by a housing main part 105 integrated with a lower part of the right lower supporting wall 71 in the lower case 13b and a cover 106 fastened to the housing main part 105, and an inner rotor 108 fixed to an oil pump shaft 107 piercing the pump housing 104 so that the oil pump shaft can be rotated and an outer rotor 109 engaged with the inner rotor 108 are housed between the housing main part 105 and the cover 106.

A driven sprocket for a pump 110 is fixed to the protruded end of the oil pump shaft 107 protruded from the housing main part 105 and a looped chain 112 is wound onto a driving sprocket 111 for a pump and the driven sprocket for a pump 110. The driving sprocket 111 for a pump is turned integrally with the primary driven gear 80 installed on the main shaft 62 so that the primary driven gear can be relatively turned to transmit power from the crankshaft 12.

The oil pan 17 connected to the lower part of the crankcase 13 is formed so that the lateral width is narrowed in a lower part when the oil pan is viewed from a longitudinal direction of the motorcycle so as to avoid contact with road surfaces shown by chain lines LL, LR in Fig. 4 when the motorcycle is banked laterally, and an oil strainer 113 housed in the oil pan 17 is connected to a lower part of the cover 106 in the pump housing 104 of the oil pump 103. The oil pump 103 sucks oil reserved in the oil pan 17 via the oil strainer 113.

As shown in Fig. 9, an oil filter 114 and an oil cooler 115 are attached to a front side wall in the lower case 13b of the crankcase 13 in a row so that a first straight line L1 tying their centers is parallel with the bonded faces of the upper and lower cases 13a, 13b.

A flange 116a with which a cooler case 116 of the oil cooler 115 is provided is fastened to the lower case 13b by four bolts 117 arranged at an equal interval in a circumferential direction of the oil cooler 115, however, a pair of the bolts 117, 117 of the four bolts 117 are arranged on a second straight line L2 inclined so that the second straight line is closer to the first straight line L1 from the oil filter 114 to the side of the oil cooler 115 above the first straight line L1, and the remaining pair of the bolts 117, 117 of the four bolts 117 are arranged on a third straight line L3 extended in parallel with the second straight line L2 below the first straight line L1.

Oil sucked via the oil strainer 113 is supplied from the oil pump 103 to the oil filter 114, the oil purified through the oil filter 114 is led to the oil cooler 115 and is cooled, and then the oil is supplied to each lubricated part of the body 11 of the engine.

As shown in Fig. 4, a pump case 120 of the water pump 102 is formed by mutually fastening a pair of case halves 121, 122 and the water pump 102 is arranged inside the driving sprocket 91 in a direction along the axis of the counter shaft 63.

A supporting cylinder 121a is integrated with one case half 121 of the pump case 120 and is fitted into a mounting hole 123 provided to a left wall of the lower case 13b fluid-tight. A moving blade 124 is housed in the pump case 120 and is fixed to one end of a water pump shaft 125. The water pump shaft 125 is arranged coaxially with the oil pump shaft 107 of the oil pump 103, pierces the supporting cylinder 121a fluid-tight so that the water pump shaft can be rotated, and the other end of the water pump shaft 125 is protruded from the pump case 120.

In addition, a projection 107a protruded from one end of the oil pump shaft 107 is fitted to a fitting concave portion 125a provided to one end of the water pump shaft 125 so that the projection can be detached. That is, the oil pump 103 is driven by power transmitted from the crankshaft 12 and the water pump 102 is also driven by the power transmitted from the crankshaft 12.

A cover 126 arranged so that at least a part is overlapped with the water pump 102 from the outside when the cover is viewed from the direction along the axis of the counter shaft 63 is attached to the lower case 13b of the crankcase 13 with the cover covering the driving sprocket 91.

A pair of the case halves 121, 122 forming the pump case 120 are mutually fastened by five bolts 127, 128, 129, 130, 131 at an interval in the circumferential direction, however, an extended-diameter head 127a of the bolt 127 arranged in a position overlapped with the chain 9 wound onto the driving sprocket 91 on a projection drawing showing a plane perpendicular to the axis of the counter shaft 63 out of the bolts 127 to 131 is arranged on the side of the crankcase 13 by being tightened through the bolt 127 from the side of the case half 121.

Both case halves 121, 121 are fastened by inserting the bolt 127 from the side of the case half 122, however, the bolts 129, 130, 131 of the residual bolts 128 to 131 also play a role in attaching the pump case 120 to the crankcase 13.

Further, the rear of the generator cover 34 is overlapped with the front of the cover 126 from the outside when the rear of the generator cover is viewed from the outside in an axial direction of the counter shaft 63, the bolt 128 is arranged under a part in which the rear of the generator cover 126 and the front of the cover 126 are overlapped, a part fastened by the bolt 128 can be efficiently arranged in space between the generator cover 34 and the cover 126, and the water pump 102 can be arranged close to the side of the crankshaft 12.

Next, to explain the action of this embodiment, the shift drum 67 is arranged in the maximum outside diameter of the clutch mechanism 81 installed at the end of the main shaft 62 on the projection drawing showing the plane perpendicular to the axis of the main shaft 62 and is assembled in the crankcase 13 from the side of the clutch mechanism 81.

Therefore, as a part between the shift drum 67 and the crankcase 13 to be sealed is included in a sealed range of the clutch mechanism 81, the sealed range is not required to be extended and sealing structure to be dedicated to the shift drum 67 is not required, the number of parts and the number of assembly can be reduced. In addition, walls forming the shift drum chamber 61a are also substantially included in the maximum outside diameter of the clutch mechanism 81 on the projection drawing showing the plane perpendicular to the axis of the main shaft 62 and hereby, a sealed range is not required to be extended.

As the transmission chamber 61 housing most of the main shaft 62, the counter shaft 63 and the shift drum 67 in the transmission M and housing the first to sixth gear trains G1 to G6 and the shift forks 64 to 66 so that they can be operated is formed in the crankcase 13 at the back of the crankshaft 12 in the state mounted in the motorcycle and the shift drum chamber 61a forming a part of the transmission chamber 61 and housing most of the shift drum 67 is formed in the rear of the crankcase 13 in the state in which the shift drum chamber semicircularly swells toward the rear of the crankcase 13 when the shift drum chamber is viewed from the axial direction of the shift drum 67, a part except the shift drum chamber 61a in the transmission chamber 61 can be made compact.

As the crankcase 13 is formed by connecting the respective cast upper and lower cases 13a, 13b, the crankshaft 12 and the counter shaft 63 are supported between the bonded faces of the upper and lower cases 13a, 13b so that they can be rotated and an upper part of the transmission chamber 61 formed by the upper case 13a is overlapped with the clutch mechanism 81 on the projection drawing showing the plane perpendicular to the axis of the main shaft 62, the rear end of the crankcase 13 can be arranged possibly close to the axis of the counter shaft 63 in the state mounted in the motorcycle and a part supporting the front end of a swing arm (not shown) can be arranged close to the counter shaft 63 in the motorcycle provided with the swing arm for supporting the rear wheel.

Further, the upper case 13a supporting both ends of the shift drum 67 forms a part of the crankcase 13 and is cast, however, as the receiving flange 100 for receiving the ball bearing 98 installed on the periphery of one end on the side of the clutch 78 of the shift drum 67 from the side of the clutch mechanism 81 is formed in the upper case 13a, the shift drum chamber 61a has the same diameter as the inside diameter of the receiving flange 100 and is cast out, the upper case 13a is not required to be machined to form the shift drum chamber 61a and the cost can be reduced. Besides, as the shift drum 67 can be assembled in the crankcase 13 from the side of the clutch mechanism 81 in a state in which the ball bearing 98 and the shift cam 103 are attached to the shift drum 67 beforehand, the efficiency of assembly and operability are enhanced.

Besides, one end of the counter shaft 63 in the transmission M is protruded from the left of the crankcase 13, the driving sprocket 91 is provided to the protruded end of the counter shaft 63, the chain 90 for transmitting power to the driving wheel is wound onto the driving sprocket 91, the water pump 102 arranged between the crankshaft 12 and the counter shaft 63 and arranged on the left face of the crankcase 13 is arranged inside the driving sprocket 91 in the direction along the axis of the counter shaft 63.

Therefore, the water pump 102 is not protruded outside the driving sprocket 91, the power unit can be made compact in a direction along the axis of the crankshaft 12, and it can contribute to the enhancement of the driving performance of the motorcycle owing to the concentration of mass.

Besides, as the cover 126 arranged so that at least a part is overlapped with the water pump 102 from the outside when the cover is viewed from the direction along the axis of the counter shaft 63 is attached to the crankcase 13, covering the driving sprocket 91, the counter shaft 63 and the water pump 102 can be closely arranged, and as accessories such as the water pump 102 and the driving sprocket 91 can be also massed three-dimensionally, mass can be concentrated more.

As the main shaft 62 of the transmission M is arranged over a straight line tying the axis of the crankshaft 12 and the axis of the counter shaft 63, distance between the main shaft 62 and the crankshaft 12 can be reduced and the power unit can be made compact in a direction along the straight line tying the axis of the crankshaft 12 and the axis of the counter shaft 63. In addition, as the water pump 102 is arranged inside the driving sprocket 91, the position of the water pump 102 from the bottom of the crankcase 13 is lifted and the lower part of the crankcase 13 can be made compact. In case the water pump 102 is driven by the transmission of power from the main shaft 62 of the transmission M as in this embodiment and is driven by the transmission of power from the counter shaft 63 or the crankshaft 12, the main shaft 62, the counter shaft 63 or the crankshaft 12 and a shaft of the water pump 102 can be closely arranged, the distance of coupling by a driving member such as the chain 112 and a gear is reduced and the weight can be reduced.

Further, as the extended-diameter head 127a of the bolt 127 arranged in a position overlapped with the chain 90 wound onto the driving sprocket 91 on the projection drawing showing the plane perpendicular to the axis of the counter shaft 63 out of the plural bolts 127 to 130 for fastening a pair of the case halves 121, 122 forming the pump case 120 of the water pump 102 is arranged on the side of the crankcase 13, the chain 90 and the pump case 120 can be arranged closer, preventing the extended-diameter head 127a of the bolt 127 from interfering with the chain 90, and the power unit can be made more compact in the direction along the axis of the counter shaft 63.

The embodiment of the invention has been described above, however, the invention is not limited to the above-mentioned embodiment and the design can be variously changed without deviating from the invention disclosed in the scope of the claims.

12 ... Crankshaft, 13 ... Crankcase, 13a ... Upper case 13b ... Lower case, 61 ... Transmission chamber, 61a ... Shift drum chamber, 62 ... Main shaft, 63 ... Counter shaft, 64, 65, 66 ... Shift fork, 67 ... Shift drum 81 ... Clutch mechanism, 98 ... Ball bearing which is bearing member, 100 ... Receiving flange, G1, G2, G3, G4, G5, G6 ... Gear train

## Claims

1. Transmission structure of a power unit for a vehicle where a crankshaft (12), a main shaft (62) and a counter shaft (63) provided with selectively establishable plural-speed gear trains (G1, G2, G3, G4, G5, G6) between the counter shaft and the main shaft (62) are supported by a crankcase (13) so that the shafts can be rotated in a state in which the crankshaft, the main shaft and the counter shaft have a mutually parallel axis, a clutch mechanism (81) provided between the crankshaft (12) and the main shaft (62) is installed at the end of the main shaft (62) outside the crankcase (13), and both ends in an axial direction of a shift drum (67) for driving shift forks (64, 65, 66) for selectively establishing the gear trains (G1 to G6) are supported by the crankcase (13) so that the shift drum can be turned around an axis parallel to the crankshaft (12), the main shaft (62) and the counter shaft (63), wherein:
the shift drum (67) arranged in the maximum outside diameter of the clutch mechanism (81) on a projection drawing showing a plane perpendicular to the axis of the main shaft (62) is disposed on an extension of a line tying the crankshaft (12) and the main shaft (62), and is assembled in the crankcase (13) from the side of the clutch mechanism (81);
a shift fork spindle (96) is disposed between the counter shaft (63) and the shift drum (67);
the crankcase (13) is formed by connecting respective cast upper and lower cases (13a, 13b);
the crankshaft (12) and the counter shaft (63) are supported between bonded faces of the upper and lower cases (13a, 13b) so that the shafts can be rotated; and
an upper part of the transmission chamber (61) formed by the upper case (13a) is overlapped with the clutch mechanism (81) on the projection drawing showing the plane perpendicular to the axis of the main shaft (62).

2. Transmission structure of a power unit for a vehicle according to Claim 1, wherein:
a transmission chamber (61) housing each gear train (G1 to G6) and the shift forks (64 to 66) is formed at the back of the crankshaft (12) in a state mounted in the vehicle in the crankcase (13); and
a shift drum chamber (61a) forming a part of the transmission chamber (61) and housing most of the shift drum (67) is formed in the rear of the crankcase (13) so that the shift drum chamber semicircularly swells toward the rear of the crankcase (13) when the shift drum chamber is viewed from an axial direction of the shift drum (67).

3. Transmission structure of a power unit for a vehicle according to any of the preceding claims, wherein:
a shift shaft (101) is rotatably supported by the crankcase (13), and
the shift shaft (101) is disposed between the shift drum (67) and the main shaft (62) on a projection drawing showing a plane perpendicular to the axis of the main shaft (62).

4. Transmission structure of a power unit for a vehicle according to any of the preceding claims, wherein:
a receiving flange (100) for receiving a bearing member (98) installed on the periphery of one end on the side of the clutch mechanism (81) of the shift drum (67) from the side of the clutch mechanism (81) is formed in the member (13a) forming at least a part of the crankcase (13) and cast for supporting both ends of the shift drum (67); and
the shift drum chamber (61a) is cast out with the shift drum chamber having the same diameter as the inside diameter of the receiving flange (100).

## Patentansprüche

1. Getriebekonstruktion einer Antriebseinheit für ein Fahrzeug, wobei eine Kurbelwelle (12), eine Hauptwelle (62) und eine Gegenwelle (63), welche mit selektiv aufbaubaren Mehrfachgang-Getriebezügen (G1, G2, G3, G4, G5, G6) zwischen der Gegenwelle und der Hauptwelle (62) versehen sind, durch ein Kurbelgehäuse (13) gelagert sind, so dass die Wellen in einem Zustand gedreht werden können, in welchem die Kurbelwelle, die Hauptwelle und die Gegenwelle eine gegenseitig parallele Achse aufweisen, wobei ein Kupplungsmechanismus (81), welcher zwischen der Kurbelwelle (12) und der Hauptwelle (62) vorgesehen ist, an dem Ende der Hauptwelle (62) außerhalb des Kurbelgehäuses (13) installiert ist, und wobei beide Enden in einer axialen Richtung einer Schalttrommel (67) zum Ansteuern von Schaltgabeln (64, 65, 66) zum selektiven Aufbauen der Getriebezüge (GI bis G6) durch das Kurbelgehäuse (13) gelagert sind, so dass die Schalttrommel um eine Achse gedreht werden kann, welche parallel zu der Kurbelwelle (12), der Hauptwelle (62) und der Gegenwelle (63) ist, wobei:
die Schalttrommel (67), welche in dem maximalen äußeren Durchmesser des Kupplungsmechanismus (81) auf einer Projektionszeichnung, welche eine Ebene senkrecht zu der Achse der Hauptwelle (62) zeigt, angeordnet ist, auf einer Verlängerung einer Linie angeordnet ist, welche die Kurbelwelle (12) und die Hauptwelle (62) verknüpft, und in dem Kurbelgehäuse (13) von der Seite des Kupplungsmechanismus (81) montiert ist;
eine Schaltgabelspindel (96) zwischen der Gegenwelle (63) und der Schalttrommel (67) angeordnet ist;
die Kurbelwelle (13) durch Verbinden jeweiliger gegossener oberer und unterer Gehäuse (13a, 13b) gebildet ist;
die Kurbelwelle (12) und die Gegenwelle (63) zwischen verbundenen Flächen der oberen und unteren Gehäuse (13a, 13b) gelagert sind, so dass die Wellen gedreht werden können; und
ein oberer Teil der Getriebekammer (61), welcher durch das obere Gehäuse (13a) gebildet ist, von dem Kupplungsmechanismus (81) auf der Projektionszeichnung, welche die Ebene senkrecht zu der Achse der Hauptwelle (62) zeigt, überlappt wird.

2. Getriebekonstruktion einer Antriebseinheit für ein Fahrzeug gemäß Anspruch 1, wobei:
eine Getriebekammer (61), welche jeden Getriebezug (G 1 bis G6) und die Schaltgabeln (64 bis 66) aufnimmt, an der Rückseite der Kurbelwelle (12) in einem in dem Fahrzeug in dem Kurbelgehäuse (13) montierten Zustand gebildet ist; und
eine Schalttrommelkammer (61 a), welche einen Teil der Getriebekammer (61) bildet und das meiste der Schalttrommel (67) aufnimmt, in der Rückseite des Kurbelgehäuses (13) gebildet ist, so dass die Schalttrommelkammer halbkreisförmig in Richtung zu der Rückseite des Kurbelgehäuses (13) ausgebaucht ist, wenn die Schalttrommelkammer von einer axialen Richtung der Schalttrommel (67) betrachtet wird.

3. Getriebekonstruktion einer Antriebseinheit für ein Fahrzeug gemäß irgendeinem der vorherigen Ansprüche, wobei:
eine Schaltwelle (101) drehbar durch das Kurbelgehäuse (13) gelagert ist, und
die Schaltwelle (101) zwischen der Schalttrommel (67) und der Hauptwelle (62) auf einer Projektionszeichnung angeordnet ist, welche eine Ebene senkrecht zu der Achse der Hauptwelle (62) zeigt.

4. Getriebekonstruktion einer Antriebseinheit für ein Fahrzeug gemäß irgendeinem der vorherigen Ansprüche, wobei:
ein Aufnahmeflansch (100) zum Aufnehmen eines Lagerelements (98), welches auf der Peripherie von einem Ende auf der Seite des Kupplungsmechanismus (81) der Schalttrommel (67) von der Seite des Kupplungsmechanismus (81) installiert ist, in dem Element (13a) gebildet ist, welches zumindest einen Teil des Kurbelgehäuses (13) bildet, und gegossen ist zum Lagern beider Enden der Schalttrommel (67); und
die Schalttrommelkammer (61 a) gegossen ist, wobei die Schalttrommelkammer den gleichen Durchmesser wie der innere Durchmesser des Aufnahmeflanschs (100) aufweist.

## Revendications

1. Structure de transmission d'un ensemble de propulsion de véhicule, dans laquelle un vilebrequin (12), un arbre principal (62) et un contre-arbre (63) muni de trains d'engrenage (G1, G2, G3, G4, G5, G6) à plusieurs vitesses, susceptibles d'être établis sélectivement entre le contre-arbre et l'arbre principal (62), sont supportés par un carter de vilebrequin (13), de manière que les arbres puissent être entraînés en rotation dans un état dans lequel le vilebrequin, l'arbre principal et le contre-arbre ont un axe mutuellement parallèle, un mécanisme d'embrayage (81), prévu entre le vilebrequin (12) et l'arbre principal (62), est installé à l'extrémité de l'arbre principal (62), à l'extérieur du carter de vilebrequin (13), et les deux extrémités, dans une direction axiale, d'un tambour de changement de vitesse (67) prévu pour entraîner des fourchettes de changement de vitesse (64, 65, 66), de manière à établir sélectivement les trains d'engrenage (G1 à G6), sont supportées par le carter de vilebrequin (13), de manière que le tambour de changement de vitesse puisse être tourné autour d'un axe parallèle au vilebrequin (12), à l'arbre principal (62) et au contre-arbre (63), dans lequel :
le tambour de changement de vitesse (67), agencé dans le diamètre extérieur maximal du mécanisme d'embrayage (81) sur une vue en projection illustrant un plan perpendiculaire à l'axe de l'arbre principal (62), est disposé sur une extension d'une ligne reliant le vilebrequin (12) et l'arbre principal (62), et est monté dans le carter de vilebrequin (13) depuis le côté du mécanisme d'embrayage (81);
une broche de fourchette de changement de vitesse (96) est disposée entre le contre-arbre (63) et le tambour de changement de vitesse (67) ;
le carter de vilebrequin (13) est formé en reliant des carters supérieur et inférieur (13a, 13b) moulés respectifs ;
le vilebrequin (12) et le contre-arbre (63) sont supportés entre des faces reliées des carters supérieur et inférieur (13a, 13b), de manière que les arbres puissent être entrainés en rotation ; et
une partie supérieure de la chambre de transmission (61), formée par le carter supérieur (13a), est en chevauchement avec le mécanisme d'embrayage (81), sur le dessin en projection illustrant le plan perpendiculaire à l'axe de l'arbre principal (62).

2. Structure de transmission d'un ensemble de propulsion de véhicule selon la revendication 1, dans lequel :
une chambre de transmission (61), logeant chaque train d'engrenage (G1 à G6) et les fourchettes de changement de vitesse (64 à 66), est formée au dos du vilebrequin (12), dans un état monté dans le véhicule, dans le carter de vilebrequin (13) ; et
une chambre de tambour de changement de vitesse (61a), faisant partie de la chambre de transmission (61) et logeant la majeure partie du tambour de changement de vitesse (67), est formée à l'arrière du carter de vilebrequin (13), de manière que la chambre de tambour de changement de vitesse constitue un bombement semi-circulaire vers l'arrière du carter de vilebrequin (13), lorsque la chambre de tambour de changement de vitesse est observée depuis une direction axiale du tambour de changement de vitesse (67).

3. Structure de transmission d'un ensemble de propulsion de véhicule selon l'une des revendications précédentes, dans lequel :
un arbre de changement de vitesse (101) est supporté à rotation par le carter de vilebrequin (13), et
l'arbre de changement de vitesse (101) est disposé entre le tambour de changement de vitesse (67) et l'arbre principal (62), sur un dessin en projection illustrant un plan perpendiculaire à l'axe de l'arbre principal (62).

4. Structure de transmission d'un ensemble de propulsion de véhicule selon l'une des revendications précédentes, dans lequel :
une bride de réception (100), pour recevoir un organe de palier (98), installé sur la périphérie d'une extrémité sur le côté du mécanisme d'embrayage (81) du tambour de changement de vitesse (67), depuis le côté du mécanisme d'embrayage (81), est formé dans l'organe (13a) formant au moins une partie du carter de vilebrequin (13) et moulé pour supporter les deux extrémités du tambour de changement de vitesse (67) ; et
la chambre de tambour de changement de vitesse (61a) est obtenue de fonderie, la chambre de tambour de changement de vitesse ayant le même diamètre que le diamètre intérieur de la bride de réception (100).
